# EUROPÄISCHE PATENTANMELDUNG

(11) **EP 4 471 237 A1**
(43) Veröffentlichungstag der Anmeldung: **04.12.2024**
(21) Anmeldenummer: 24178951.0
(22) Anmeldetag: 29.05.2024
(51) Int. Cl.: E04H 17/16

(54) **ANORDNUNG UMFASSEND EIN ANPRALLSCHUTZSYSTEM MIT MINDESTENS EINEM NACHHALTIGKEITSMODUL**

(30) Priorität: 30.05.2023 DE 102023114142
(71) Anmelder: Projekt w - Systeme aus Stahl GmbH, 33154 Salzkotten (DE)
(72) Erfinder: Welschof, Nils, 33104 Paderborn (DE)
(74) Vertreter: Duda, Rafael Thomas

(57) **Zusammenfassung**

Die vorliegende Erfindung betrifft eine Anordnung, insbesondere zur Verwendung als Absturzsicherung in einem Parkhaus, umfassend ein Anprallschutzsystem mit mindestens einem an dem Anprallschutzsystem in senkrechter Ausrichtung angeordneten Nachhaltigkeitsmodul (14), wobei das Anprallschutzsystem mindestens eine Gitterstabmatte (10) umfasst, an der das Nachhaltigkeitsmodul (14) über zumindest eine erste, in einem oberen Bereich der Gitterstabmatte (10) angeordnete, Befestigungseinrichtung (15) und zumindest eine zweite, in einem unteren Bereich der Gitterstabmatte (10) angeordnete, Befestigungseinrichtung (16) befestigt ist, derart, dass die zweite Befestigungseinrichtung (16) sich bei Einwirkung einer Kraft, die einen vorgegebenen Grenzwert überschreitet und die senkrecht oder in einem spitzen Winkel auf die Fläche der Gitterstabmatte (10) einwirkt, aus ihrer Verbindung mit der Gitterstabmatte (10) löst, wohingegen die Verbindung der ersten, im oberen Bereich angeordneten, Befestigungseinrichtung (15) mit der Gitterstabmatte (10) bestehen bleibt.

## Beschreibung

Die vorliegende Erfindung betrifft eine Anordnung, insbesondere zur Verwendung als Absturzsicherung in einem Parkhaus, umfassend ein Anprallschutzsystem mit mindestens einem an dem Anprallschutzsystem in senkrechter Ausrichtung angeordneten Nachhaltigkeitsmodul.

Sogenannte Solarzäune, d.h. herkömmliche Zäune an denen Photovoltaikmodule angeordnet sind, sind grundsätzlich schon länger bekannt und werden beispielsweise in der US 2011/0146668 A1 beschrieben. Hier bestehen die Zäune aus Pfosten und plattenförmigen Zaunelementen (Paneelen), an denen die Photovoltaikmodule angebracht sind.

Ferner sind Solarzäune mit Gitterstabmatten aus dem Stand der Technik bekannt. So offenbart beispielsweise die DE 20 2017 103 757 U1 einen Zaun mit Zaunfeldern, die aus Stabmatten bestehen. An den Posten sind winkelförmige klammerartige Haltevorrichtungen über Schrauben angebracht, an deren senkrechtem Schenkel dann wiederum die Solarmodule angebracht werden Die Verankerung der Solarmodule erfolgt hierbei ebenfalls an den Pfosten der Zaunkonstruktion, wobei die Klammern an den Pfosten angeschraubt und die Solarmodule an eine Fläche der Klammern angeklebt werden können.

Die DE 20 2022 106 213 U1 offenbart ebenfalls einen Zaun mit Gitterstabmatten, die zwischen jeweils zwei senkrechten Zaunpfosten angeordnet sind. Die Solarpaneele sind über Befestigungsmittel lösbar an den Zaunelementen fixiert. Die Befestigung erfolgt dabei über Klemmschellen, Nieten, Profile oder Schienen und Haltewinkel an einer Art Schlüsselloch der Pfosten. Die Anbringung der Solarpaneele erfolgt auch hier, indem diese im Bereich ihrer umlaufenden Rahmen an den Zaunpfosten befestigt werden. Eine unmittelbare oder gar ausschließliche Befestigung der Solarpaneele direkt an den Gitterstabmatten ist nicht vorgesehen. Weder bei dieser noch bei der aus dem vorgenannten Dokument bekannten Lösung sind Einrichtungen bekannt, die spezifisch für einen Anprall gegen das Zaunelement vorgesehen sind, bei dem sich die Photovoltaikmodule lösen könnten. Eine derartige Anforderung stellt sich bei einem herkömmlichen Zaunelement, welches in erster Linie dazu dient, Grundstücke oder Geländebereiche nach außen hin abzugrenzen, nicht, da derartige Zaunelemente keinen höheren mechanischen Belastungen ausgesetzt sind.

Zwar sind speziell für Parkhäuser vorgesehene Photovoltaikmodule, wie sie beispielsweise in der WO 2021/089 679 A1 beschrieben sind, aus dem Stand der Technik bekannt, allerdings werden diese im Dachbereich montiert, so dass ihre Flächen, auf die die Sonneneinstrahlung fällt, entweder horizontal oder geneigt angeordnet sind. Die senkrechten Basiselemente, die dazu dienen, die Solarmodule zu tragen, bestehen hier aus Beton. Die einzelnen Photovoltaikmodule werden über abgewinkelte Rahmenprofile, in deren Aufnahmen sie einschiebbar sind, miteinander verbunden. Bei Parkhäusern ist es bislang nicht vorgesehen, auch die Flächen an vertikalen Absperrungen für die Anbringung von Photovoltaikmodulen zu nutzen.

Für die Absperrung der Parkflächen in Parkhäusern können besonders belastbar ausgebildete Absperrkonstruktionen, insbesondere dynamische Anprallschutzsysteme verwendet werden, die auch Gitterstabmatten umfassen. Da Parkhäuser häufig mehrere Etagen mit Parkflächen aufweisen, bestehen hier Vorschriften für die mechanische Belastbarkeit der Absperrungen. Diese Absperrwände müssen so ausgelegt sein, dass sie einem Anprall eines Fahrzeugs mit einer bestimmten Geschwindigkeit standhalten, da sonst die Gefahr bestünde, dass das Fahrzeug bei einem Fahrfehler durch die Absperrung durchbricht, was bei einem Parkdeck in einer oberen Etage einen Absturz des Fahrzeugs zur Folge hätte. Um diesen Anprallschutz zu erfüllen, müssen für diese Absperrungen wesentlich stabilere Befestigungen verwendet werden als bei einfachen Gitterstabmattenzäunen. Zudem besteht die Vorschrift, dass an diesen Absperrungen keine Bauteile verwendet werden dürfen, die sich bei einem Anprall eines Fahrzeugs lösen könnten, da sonst die Gefahr bestünde, dass diese Bauteile herabfallen, was eine Gefahr für Personen und Fahrzeuge darstellte, die sich in einem tiefer gelegenen Bereich jenseits der Absperrung befinden. Aus diesem Grunde war es bislang nicht üblich, in Parkhäusern die vertikalen Flächen der Absperrungen für die Anbringung von Photovoltaikmodulen zu nutzen.

Ausgehend von der zuvor geschilderten Problematik besteht die Aufgabe der vorliegenden Erfindung darin, eine Anordnung der eingangs genannten Art zur Verfügung zu stellen, die geeignet ist, besonders hohen mechanischen Belastungen standzuhalten und zudem hohen Sicherheitsvorschriften genügt, wie sie beispielsweise für Parkhäuser oder andere Gebäude oder gegebenenfalls für Absperrungen im Gelände gegeben sind.

Die Lösung der vorgenannten Aufgabe liefert eine Anordnung der eingangs genannten Gattung mit den Merkmalen des Anspruchs 1.

Die erfindungsgemäße Anordnung, die insbesondere zur Verwendung als Absturzsicherung in einem Parkhaus vorgesehen ist, umfasst ein Anprallschutzsystem mit mindestens einem an dem Anprallschutzsystem in senkrechter Ausrichtung angeordneten Nachhaltigkeitsmodul, wobei das Anprallschutzsystem mindestens eine Gitterstabmatte umfasst, an der das Nachhaltigkeitsmodul über zumindest eine erste, in einem oberen Bereich der Gitterstabmatte angeordnete, Befestigungseinrichtung und zumindest eine zweite, in einem unteren Bereich der Gitterstabmatte angeordnete, Befestigungseinrichtung befestigt ist, derart, dass die zweite Befestigungseinrichtung sich bei Einwirkung einer Kraft, die einen vorgegebenen Grenzwert überschreitet und die senkrecht oder in einem spitzen Winkel auf die Fläche der Gitterstabmatte einwirkt, aus ihrer Verbindung mit der Gitterstabmatte löst, wohingegen die Verbindung der ersten, im oberen Bereich angeordneten, Befestigungseinrichtung mit der Gitterstabmatte bestehen bleibt.

Die Erfindung sieht somit zwei hinsichtlich ihrer konstruktiven Ausführung und in ihrer Wirkung unterschiedliche Vorrichtungen vor, um das Nachhaltigkeitsmodul an der Gitterstabmatte des Anprallschutzsystems zu befestigen. Die eine Vorrichtung wird hierin als erste, obere Befestigungseinrichtung bezeichnet, während die andere Vorrichtung hierin als zweite, untere Befestigungseinrichtung bezeichnet wird, da sie sich in vertikaler Richtung gesehen, bei an der Gitterstabmatte befestigtem Nachhaltigkeitsmodul unterhalb der ersten Befestigungseinrichtung befindet.

Die Erfindung geht von dem Gedanken aus, dass es grundsätzlich von Vorteil ist, wenn man auch senkrechte Flächen von Anprallschutzsystemen oder allgemein Absperrungen für die Anbringung von Nachhaltigkeitsmodulen nutzt, um auf diese Weise beispielsweise zusätzliche regenerative Energie zu gewinnen. Die hierbei gewonnene regenerative Energie kann beispielsweise direkt über eine Wallbox einem Verbraucher oder einem Stromspeicher des Parkhauses zugeführt werden.

Der Begriff "Nachhaltigkeitsmodul" im Sinne der vorliegenden Erfindung umfasst beispielsweise Photovoltaikmodule, das heißt Module mittels derer elektrische Energie regenerativ aus Sonnenstrahlung gewonnen werden kann.

Der Begriff "Nachhaltigkeitsmodul" gemäß der vorliegenden Erfindung umfasst weiterhin Windkraftmodule zur Erzeugung regenerativer elektrischer Energie aus Windkraft, das heißt Windkraftanlagen, insbesondere kleinere Windturbinen. Hier kommen insbesondere solche Windturbinen in Betracht, die einen geringen Platzbedarf haben und daher an Flächen von Anprallschutzsystemen angebracht werden können, wie beispielsweise Windturbinen mit senkrechter Rotationsachse und gekrümmten Rotorblättern. Derartige kleinere Windturbinen haben einen kleinen Rotationsradius, verursachen wenig Lärm und nutzen die Windkraft sehr effektiv zur Stromerzeugung.

Der Begriff "Nachhaltigkeitsmodul" gemäß der vorliegenden Erfindung umfasst weiterhin Module zur Gewinnung von Trinkwasser, die beispielsweise in Gegenden mit geringen Niederschlägen eingesetzt werden. In einem Artikel von Nikita Hanikel et al. In ACS Cent. sci. 2019, 5, 10, 1699-1706, veröffentlicht am 17.08.2019, werden beispielsweise Systeme zur Gewinnung von Trinkwasser aus der Luft in Gebieten mit aridem Klima beschrieben, bei denen mikroporöse Aluminium-basierte metallorganische Gerüstsubstanzen MOF (metal organic framework) verwendet werden, um nachts Wasser aus der Luftfeuchtigkeit zu adsorbieren und tagsüber durch Erwärmung mit Hilfe von aus Sonnenenergie gewonnenem Strom zu desorbieren und danach zu kondensieren. Da bei diesen Systemen der Strom für die Erwärmung über Photovoltaikelemente gewonnen wird, ist keine Stromversorgung von extern notwendig.

Schließlich umfasst der Begriff "Nachhaltigkeitsmodul" gemäß der vorliegenden Erfindung auch Begrünungsmodule, das heißt Vorrichtungen, die dazu eingerichtet sind, dass an diesen Pflanzen wachsen können. Die an den Begrünungsmodulen angeordneten Pflanzen tragen beispielsweise in einem Parkhaus zur Luftverbesserung bei, da sie Kohlenstoffdioxid aufnehmen und Sauerstoff erzeugen sowie gegebenenfalls auch weitere Schadstoffe aus der Luft aufnehmen und absorbieren können. Die Begrünungsmodule umfassen vorteilhafterweise einen Montagerahmen, an dem Vertikalblumenkästen angeordnet sind.

Um den Sicherheitsvorschriften zu genügen, muss die Befestigung der Nachhaltigkeitsmodule an den Anprallschutzsystemen so erfolgen, dass auch bei hoher mechanischer Belastung dieser, beispielsweise durch den Anprall eines Fahrzeugs, das Nachhaltigkeitsmodul oder Teile davon oder zur Befestigung verwendete Bauteile nicht herabfallen können und somit keine Gefahr darstellen. Um dieses Problem zu lösen, liegt ein Merkmal des erfindungsgemäßen Lösungsgedankens darin, die Befestigung des Nachhaltigkeitsmoduls so auszuführen, dass gewisse Elemente der Befestigung bei Einwirkung hoher Kräfte, wie sie beispielsweise beim Anprall eines Fahrzeugs auftreten, quasi eine Sollbruchstelle bilden, während andere Elemente der Befestigung der mechanischen Belastung standhalten und das Nachhaltigkeitsmodul auch nach einem Anprall so halten, dass es nicht herabfallen kann, sondern weiterhin an der Gitterstabmatte des Anprallschutzsystems gehalten wird.

Dies lässt sich insbesondere Erreichen, wenn man wenigstens eine zweite, untere Befestigungseinrichtung für die Befestigung des Nachhaltigkeitsmoduls an der Gitterstabmatte verwendet, die sich bei einer mechanischen Belastung etwa senkrecht zur Fläche der Gitterstabmatte, wie sie beispielsweise beim Anprall eines Fahrzeuges entsteht, löst, wobei wenigstens eine obere Befestigungseinrichtung für die Befestigung des Nachhaltigkeitsmoduls an der Gitterstabmatte vorgesehen ist, die sich bei der mechanischen Belastung nicht löst, so dass das Nachhaltigkeitsmodul bei Auftreten des Belastungsfalls quasi eine Schwenkbewegung vollführt, bei der es nach oben klappt, aber durch die obere Befestigungseinrichtung weiterhin an der Gitterstabmatte gehalten wird. Mit dem Begriff "untere" Befestigungseinrichtung ist nicht gemeint, dass diese unten an der Gitterstabmatte angebracht sein muss, sondern dies sagt nur aus, dass sich diese zweite Befestigungseinrichtung unterhalb der ersten, oberen Befestigungseinrichtung befindet, was also beispielsweise auch in der Mitte der Gitterstabmatte (in senkrechter/vertikaler Richtung gesehen) sein kann. Die erste, obere Befestigungseinrichtung befindet sich vergleichsweise weit oben an der Gitterstabmatte, kann aber durchaus auch mit Abstand zur Oberkante der Gitterstabmatte oder des Nachhaltigkeitsmoduls angeordnet sein.

Insbesondere ist es vorteilhaft, wenn wenigstens eine erste, obere Befestigungseinrichtung bei Lösen einer unteren Befestigungseinrichtung auf den oberen Bereich des Nachhaltigkeitsmoduls eine Zugkraft ausübt, beispielsweise wenn diese unter einer Vorspannung steht, und dadurch das Nachhaltigkeitsmodul quasi nach oben gezogen wird, was die genannte Schwenkbewegung auslöst.

Die erfindungsgemäße Lösung unterscheidet sich bereits in einem wesentlichen Punkt von den aus dem Stand der Technik bekannten Lösungen, bei denen die Photovoltaikmodule, welche in vertikaler Ausrichtung beispielsweise an Zäunen befestigt werden, grundsätzlich an den Zaunpfosten angebracht werden, da man davon ausgeht, dass eine solche Verbindung stabiler ist und höhere Kräfte aufnehmen kann. Bei einer Absperrung, insbesondere einem dynamischen Anprallschutzsystem für ein Parkhaus weisen die Gitterstabmatten genormte Schweißverbindungen auf, um den Anprallschutz zu gewährleisten. Außerdem werden die Gitterstabmatten an Pfosten oder Trägern der Stahlkonstruktion des Parkhauses durch spezifische Befestigungsvorrichtungen, wie sie beispielsweise in der DE 103 56 220 B4 beschrieben sind, so angebracht, dass die Verankerung der Gitterstabmatte hohe Kräfte aufnehmen kann und beim Anprall eines Fahrzeugs nicht nachgibt, so dass das Fahrzeug nicht durch die Absperrung brechen kann. Die Gitterstabmatte selbst stellt somit bei einer solchen Absperrung eine stabile Fläche zur Verfügung, die sich zur Anbringung der Nachhaltigkeitsmodule, insbesondere von Photovoltaikmodulen eignet, so dass anders als im Stand der Technik eine Anbringung dieser an den Pfosten nicht erforderlich ist.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Gemäß einer bevorzugten Weiterbildung der vorliegenden Erfindung ist die erste, obere Befestigungseinrichtung einerseits an dem Nachhaltigkeitsmodul in dessen oberem Bereich und andererseits an wenigstens einem Stab der Gitterstabmatte angeordnet.

Vorzugsweise umfasst die erste, obere Befestigungseinrichtung wenigstens ein Zugmittel, welches mit dem Nachhaltigkeitsmodul, vorzugsweise an seinem, ggf. oberen, Rahmen, verbunden ist. Dieses Zugmittel hat die Aufgabe, beim Anprall auf die Fläche der Gitterstabmatte den oberen Bereich des Nachhaltigkeitsmoduls durch Zugkraft an der Gitterstabmatte zu halten, so dass sich nur der untere Bereich des Nachhaltigkeitsmoduls von der Gitterstabmatte löst, während dieses in seinem oberen Bereich gehalten wird und somit nicht herunterfallen kann.

Vorteilhafterweise ist hierbei vorgesehen, dass das Zugmittel durch mindestens eine Bohrung des Nachhaltigkeitsmoduls geführt ist und jenseits dieser Bohrung an der Gitterstabmatte angeordnet ist. In der Regel sind bei einem Nachhaltigkeitsmodul bereits Bohrungen im Bereich des (Montage-)Rahmens vorhanden, so dass man diese Bohrungen dazu nutzen kann, das Zugmittel hindurchzuführen und auf diese Weise den Rahmen des Nachhaltigkeitsmoduls an der Gitterstabmatte festlegen kann.

Vorzugsweise umfasst die erste, obere Befestigungseinrichtung ein Klemmelement, welches an wenigstens einem Stab der Gitterstabmatte angeordnet ist, wobei das wenigstens eine Zugmittel durch das Klemmelement hindurchgeführt und mit dem Nachhaltigkeitsmodul verbunden ist.

Gemäß einer bevorzugten Weiterbildung der vorliegenden Erfindung ist das Zugmittel in seiner Längserstreckung gesehen durch das Klemmelement hindurchführbar, so dass danach wenigstens ein Stab der Gitterstabmatte umgreifbar und schließlich durch das Nachhaltigkeitsmodul, insbesondere seinen Rahmen, hindurchführbar ist, um dieses an der Gitterstabmatte festzulegen. Durch dieses Umgreifen eines oder mehrerer Stäbe der Gitterstabmatte wird das Zugmittel an der Gitterstabmatte festgelegt, wobei es außerdem durch das Hindurchführen, vorzugsweise durch dessen (Montage-)Rahmen mit dem Nachhaltigkeitsmodul verbunden ist, so dass im Belastungsfall die obere Befestigung des Nachhaltigkeitsmoduls an der Gitterstabmatte bestehen bleibt, selbst wenn sich die Gitterstabmatte durch den Anprall verformt. Das Zugmittel kann einen oder mehrere senkrechte und/oder auch waagrechte Stäbe einer Gitterstabmatte umgreifen, was auch von der Art der Gitterstabmatte, den Abständen der einzelnen Gittermattenstäbe und dergleichen abhängt. Wichtig ist nur, dass das Zugmittel das Nachhaltigkeitsmodul sichert, wenn sich die zweite, untere Befestigungseinrichtung durch einen Anprall gelöst hat.

Gemäß einer bevorzugten Weiterbildung der vorliegenden Erfindung umfasst das wenigstens eine Zugmittel wenigstens zwei Zugmittelstränge, wobei jeder Zugmittelstrang jeweils wenigstens einen Stab der Gitterstabmatte umgreift. Die Stäbe, die von den beiden Zugmittelsträngen umgriffen werden, sind hierbei voneinander beabstandet. Auf diese Weise ist eine bessere Kräfteverteilung gegeben, wenn sich die zweite, untere Befestigungseinrichtung gelöst hat.

Vorzugsweise sind beide Zugmittelstränge durch das gleiche Klemmelement hindurchgeführt. Bei dieser Variante benötigt man nur jeweils ein Klemmelement für die beiden Zugmittelstränge, die mit dem Klemmelement jeweils einen Befestigungspunkt für das Nachhaltigkeitsmodul bilden.

Vorzugsweise ist das Klemmelement der ersten, oberen Befestigungseinrichtung an wenigstens zwei Stäben der Gitterstabmatte angeordnet. Dies empfiehlt sich für eine sichere Befestigung des Zugmittels an der Gitterstabmatte, insbesondere, wenn zwei Zugmittelstränge verwendet werden, die sich beispielsweise von der ersten, oberen Befestigungseinrichtung ausgehend zu beiden Seiten hin erstrecken.

Die Verbindung des Zugmittels mit der Gitterstabmatte erfolgt somit bevorzugt dadurch, dass das Zugmittel Gitterstäbe der Gitterstabmatte umgreift und dass das Zugmittel beispielsweise über eine Klemme oder eine gleichwertige Befestigungsvorrichtung an der Gitterstabmatte festgelegt ist. Die Verbindung des Zugmittels mit dem Nachhaltigkeitsmodul erfolgt wiederum dadurch, dass das Zugmittel wenigstens einmal durch den (Montagerahmen-)Rahmen des Nachhaltigkeitsmoduls hindurchgeführt wird. Besonders vorteilhaft für eine gleichmäßige Verteilung der am Nachhaltigkeitsmodul angreifenden Kräfte ist es, wenn das Zugmittel mindestens zweifach durch das Nachhaltigkeitsmodul hindurchgeführt ist. Dabei kann man beispielsweise zwei an der Innenseite der Gitterstabmatte verlaufende Zugmittelstränge verwenden, die an der Gitterstabmatte festgelegt sind und auf der Außenseite, jenseits des Nachhaltigkeitsmoduls ineinanderlaufen. Bei dieser bevorzugten Variante handelt es somit nur um ein einziges Zugmittel, welches eine zweifach durch das Nachhaltigkeitsmodul hindurchgeführte Schleife bildet.

Vorzugsweise ist als Zugmittel der ersten, oberen Befestigungseinrichtung ein Stahlseil vorgesehen. Stahlseile können hohe Kräfte aufnehmen und beispielsweise über Kauschen so eingefasst werden, dass eine sichere Verbindung zu den Nachhaltigkeitsmodulen gegeben ist, an denen das Stahlseil angebracht wird, wodurch verhindert wird, dass im Belastungsfall das Stahlseil vom Nachhaltigkeitsmodul abreißt oder an der Befestigungsstelle ausreißt.

Eine bevorzugte Weiterbildung der vorliegenden Erfindung sieht vor, dass durch Einwirkung einer Kraft auf die Gitterstabmatte, insbesondere einem Anprall, die zweite Befestigungseinrichtung gelöst wird und das Nachhaltigkeitsmodul durch das Zugmittel der ersten, oberen Befestigungseinrichtung in eine Schwenkbewegung um eine horizontale Achse gezwungen wird. Da sich die eine oder mehrere erste Befestigungseinrichtungen im oberen Bereich der Befestigung des Nachhaltigkeitsmoduls an der Gitterstabmatte befinden, während die sich im Belastungsfall lösende zweite Befestigungseinrichtung weiter unten an der Gitterstabmatte befindet und auch die Schubkraft weiter unten oder in der Mitte (in Höhenrichtung gesehen) an der Gitterstabmatte angreift, kann sich bei Lösen der zweiten Befestigungseinrichtung das Nachhaltigkeitsmodul in seinem unteren Bereich von der Gitterstabmatte weg bewegen, wird aber durch die erste, im oberen Bereich des Nachhaltigkeitsmoduls angreifende Befestigungseinrichtung festgehalten, wodurch sich die genannte Schwenkbewegung des Nachhaltigkeitsmoduls um eine obere horizontale Achse ergibt.

Gemäß einer bevorzugten Weiterbildung der vorliegenden Erfindung können für die Anbringung eines Nachhaltigkeitsmoduls an der Gitterstabmatte auch zwei oder mehrere voneinander in Längsrichtung der Gitterstabmatte beabstandete erste Befestigungseinrichtungen verwendet werden. Ergänzend oder alternativ kann jeweils wenigstens eine zweite Befestigungseinrichtung für die Befestigung zweier in Längsrichtung der Anordnung aneinandergrenzender benachbarter Nachhaltigkeitsmodule an einer Gitterstabmatte vorgesehen sein, welche dort angeordnet ist, wo die Nachhaltigkeitsmodule aneinandergrenzen. Die Verwendung zweier mit Abstand nebeneinander liegender erster, oberer Befestigungseinrichtungen empfiehlt sich, um im Falle eines Anpralls das Nachhaltigkeitsmodul sicher und in einer etwa waagrechten Position zu halten. Bei der zweiten, unteren Befestigungseinrichtung, die sich im Belastungsfall löst, ist es vorteilhaft, wenn diese zwischen zwei benachbarten Nachhaltigkeitsmodulen angeordnet ist und auf diese Weise gleichzeitig zwei aneinandergrenzende Nachhaltigkeitsmodule hält. Die zweite, untere Befestigungseinrichtung kann so konstruiert sein, dass durch den beim Anprall von der Innenseite her über die Gitterstabmatte auf die Nachhaltigkeitsmodule einwirkende Schubkraft die Befestigungseinrichtung nach außen (von der Gitterstabmatte weg) drückt, dadurch eines oder beide Nachhaltigkeitsmodule nicht mehr von der Befestigungseinrichtung geklemmt werden und sich von der Gitterstabmatte wegbewegen können. Die Gitterstabmatte ist vorzugsweise so konstruiert, dass sie sich beim Anprall zwar verformt, aber sich nicht aus ihrer Verankerung löst, die über spezifische Befestigungseinrichtungen an vertikalen Pfosten bewirkt wird, die sich jeweils an den Enden einer Gitterstabmatte befinden.

Gemäß einer weiteren vorteilhaften Ausführungsvariante kann die erste, obere Befestigungseinrichtung wenigstens ein Klammerelement umfassen, welches über einen Horizontalstab der Gitterstabmatte greift und mit dem Nachhaltigkeitsmodul, besonders bevorzugt an seinem oberen (Montage-)Rahmen, verbunden ist. Auch bei dieser Ausführungsvariante ist vorgesehen, dass durch Einwirkung einer Kraft auf die Gitterstabmatte die zweite Befestigungseinrichtung gelöst wird und das Nachhaltigkeitsmodul durch das Klammerelement der ersten, oberen Befestigungseinrichtung in eine Schwenkbewegung um eine horizontale Achse gezwungen wird.

Das Klammerelement umfasst vorzugsweise ein U-förmig ausgebildetes Basiselement, das über einen, oder mehrere, Horizontalstab der Gitterstabmatte greift und mindestens ein mit einer Bohrung versehenes Platten- oder Flachelement aufweist, welches sich von dem Basiselement senkrecht, d.h. parallel zu den Vertikalstreben der Gitterstabmatte, erstreckt. In einer mehr bevorzugten Ausführungsvariante umfasst das Klammerelement mindestens zwei jeweils mit einer Bohrung versehene Platten- oder Flachelemente und mindestens eine Aussparung zwischen diesen Platten- oder Flachelementen. Weiterhin kann das Klammerelement in einer weiteren bevorzugten Ausführungsvariante mindestens drei jeweils über Aussparungen voneinander beabstandete Platten- oder Flachelemente aufweisen.

Vorzugsweise ist vorgesehen, dass ein Schenkel des U-förmig ausgebildeten Basiselements kürzer ist als das zu dem Schenkel parallel verlaufende mit einer Bohrung versehene Platten- oder Flachelement. Mit anderen Worten ist das Klammerelement so ausgebildet, dass dieses im Bereich der oberen U-förmigen Umbiegung einen Schenkel aufweist, der kürzer ist als das oder die zuvor genannten Platten- oder Flachelemente des Klammerelements, und der dann den Horizontalstab übergreift.

Die Verbindung des wenigstens einen Klammerelements mit dem Nachhaltigkeitsmoduls kann vorzugsweise über ein Befestigungsmittel, wie beispielsweise ein Zugmittel, vorzugsweise ein Stahlseil, oder eine Distanzschraube erfolgen, besonders bevorzugt indem dieses durch mindestens eine Bohrung des Nachhaltigkeitsmoduls und des Platten- oder Flachelements geführt ist.

Gemäß einer bevorzugten Weiterbildung der vorliegenden Erfindung ist die zumindest eine zweite Befestigungseinrichtung als Klemmeinrichtung ausgebildet, die das wenigstens eine Nachhaltigkeitsmodul, beispielsweise an seinem (Montage-)Rahmen, erfasst und dieses klemmend an wenigstens einem Stab der Gitterstabmatte festlegt. Bei einem Parkhaus ist es so, dass die Absperrung so stabil ausgebildet und befestigt sein muss, dass das Abstürzen eines gegen die Absperrung fahrenden Fahrzeugs verhindert wird. Die Gitterstabmatten der Absperrung sind zu dem Bereich hin gerichtet, in dem die Fahrzeuge fahren, also zum Inneren des Parkhauses hin, während die Nachhaltigkeitsmodule dann an der Außenseite der Absperrung an den Gitterstabmatten angebracht werden. Bei Einwirkung einer erheblichen Kraft auf die Fläche der Gitterstabmatte, beispielsweise durch einen Anprall eines gegen die Absperrung fahrenden Fahrzeugs, wird die untere Klemmverbindung gelöst, so dass das Nachhaltigkeitsmodul sich von der Gitterstabmatte löst, aber in seinem oberen Bereich weiterhin über das erste Befestigungselement an der Absperrung gehalten wird und nicht in einen tieferen Bereich herabfallen kann, was eine erhebliche Gefahr für Personen im umliegenden Bereich darstellen würde.

Gemäß einer bevorzugten Weiterbildung der vorliegenden Erfindung kann die zumindest eine zweite Befestigungseinrichtung den Randbereich des mindestens einen Nachhaltigkeitsmoduls direkt oder den im Randbereich verlaufenden (Montage-)Rahmen des Nachhaltigkeitsmoduls übergreifen. Das Nachhaltigkeitsmodul kann somit in einem Randbereich, vorzugsweise in einem Randbereich an seiner senkrechten Kante von der zweiten Befestigungseinrichtung erfasst und auf diese Weise an der Gitterstabmatte festgelegt bzw. mit dieser lösbar fixiert werden.

Gemäß einer bevorzugten Weiterbildung kann die zweite Befestigungseinrichtung den Randbereich eines ersten Nachhaltigkeitsmoduls sowie den Randbereich eines zweiten, benachbart zu dem ersten Nachhaltigkeitsmodul angeordneten, Nachhaltigkeitsmoduls gemeinsam übergreifen. Die zumindest eine zweite Befestigungseinrichtung ist sodann im senkrechten Zwischenraum zwischen zwei benachbarten Nachhaltigkeitsmodulen angeordnet und übergreift beide Nachhaltigkeitsmodule jeweils in einem Randbereich, entweder direkt oder deren (Montage-)Rahmen. Bei dieser Lösungsvariante ist es in vorteilhafter Weise möglich, mittels nur einer Befestigungseinrichtung zwei benachbarte Nachhaltigkeitsmodule gleichzeitig zu erfassen und festzulegen.

Gemäß einer bevorzugten Weiterbildung der vorliegenden Erfindung umfasst die zumindest eine zweite Befestigungseinrichtung zwei Klemmelemente, wobei das erste Klemmelement den Randbereich mindestens eines Nachhaltigkeitsmoduls erfasst und das zweite Klemmelement in Richtung senkrecht zur Ebene des Nachhaltigkeitsmoduls mit Abstand zum ersten Klemmelement angeordnet ist und an wenigstens einem Stab der Gitterstabmatte, vorzugsweise an wenigstens zwei Stäben der Gittermatte ein Widerlager hat. Bei dieser bevorzugten konstruktiven Variante erfasst das erste Klemmelement der zweiten Befestigungseinrichtung das eine oder auch zwei zueinander benachbarte Nachhaltigkeitsmodule, entweder direkt oder deren (Montage-)Rahmen, während über das zweite Klemmelement die Verbindung mit der Gitterstabmatte hergestellt wird. Im Falle eines Anpralls gegen die Gitterstabmatte wird die Verbindung zwischen den beiden Klemmelementen gelöst, so dass wiederum die Verbindung zwischen dem Nachhaltigkeitsmodul und der Gitterstabmatte gelöst wird.

Gemäß einer bevorzugten Weiterbildung der vorliegenden Erfindung sind das erste Klemmelement und das zweite Klemmelement der zweiten Befestigungseinrichtung über wenigstens ein Gewindeelement, insbesondere über eine Gewindestange, einen Gewindebolzen oder eine Schraube miteinander verbindbar. Bei Einwirkung einer hohen Kraft auf die Fläche der Gitterstabmatte, zum Beispiel beim Anprall eines Fahrzeuges, wird die Gitterstabmatte in der Regel verformt. Die zweite Befestigungseinrichtung wird so beaufschlagt, dass sie sich verbiegt, wobei zum Beispiel das erste Klemmelement auseinandergedrückt wird, wodurch sich die Verbindung mit dem Nachhaltigkeitsmodul löst und dieses von der Gitterstabmatte freigegeben wird. Die Krafteinwirkung auf die erste obere Befestigungseinrichtung ist geringer, da diese in der Regel oberhalb des Anprallbereichs liegt. Die Verbindung durch diese erste, obere Befestigungseinrichtung bleibt somit bestehen und hält das Nachhaltigkeitsmodul weiterhin an der Gitterstabmatte fest.

Gegenstand der vorliegenden Erfindung ist weiterhin eine Anordnung der zuvor beschriebenen Art, wobei das Nachhaltigkeitsmodul ein Photovoltaikmodul, ein Windkraftmodul, ein Trinkwassererzeugungsmodul oder ein Begrünungsmodul oder eine Kombination aus zwei oder mehreren der genannten Module umfasst.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Figur 1 eine Innenansicht einer beispielhaften erfindungsgemäßen Anordnung;
Figur 2 eine Außenansicht der in Figur 1 gezeigten Anordnung;
Figur 3 eine Ansicht einer als Klemmelement ausgebildeten zweiten, unteren Befestigungseinrichtung zur Befestigung zweier benachbarter Nachhaltigkeitsmodule an einer Gitterstabmatte;
Figur 4 eine Ansicht einer ersten Befestigungseinrichtung gemäß einer ersten Ausführungsvariante, welche im oberen Bereich an einer Gitterstabmatte einer Absperrung bzw. eines Anprallschutzsystems angebracht ist;
Figur 5 eine weitere Ansicht der ersten Befestigungseinrichtung, jedoch von der Außenseite der Absperrung hergesehen;
Figur 6a-d eine weitere Ausführungsvariante einer ersten Befestigungseinrichtung, welche an einer Gitterstabmatte angebracht ist, und
Figur 7 eine Ansicht einer Anordnung mit einem Begrünungsmodul.

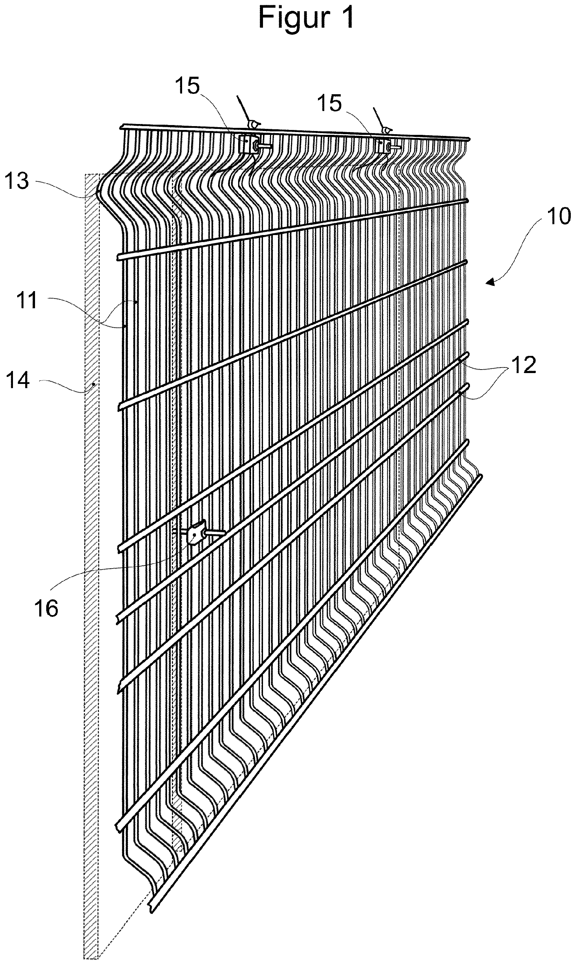

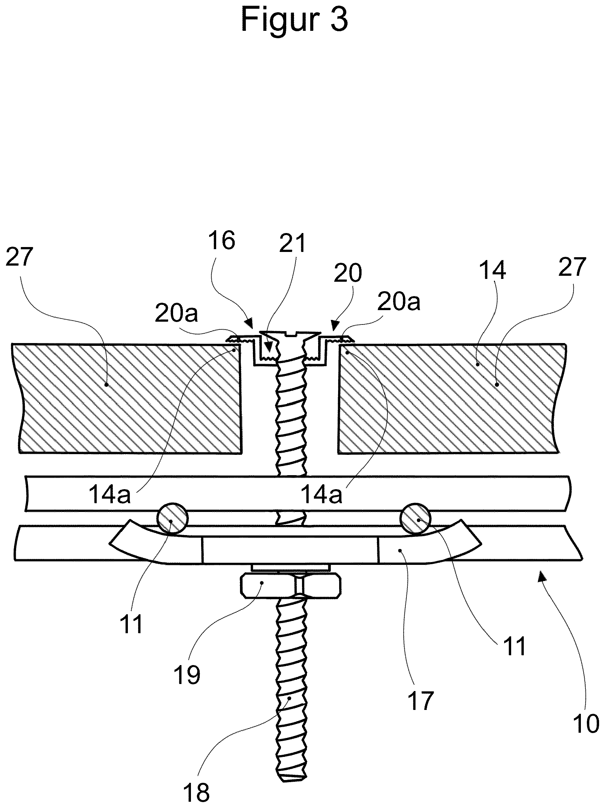

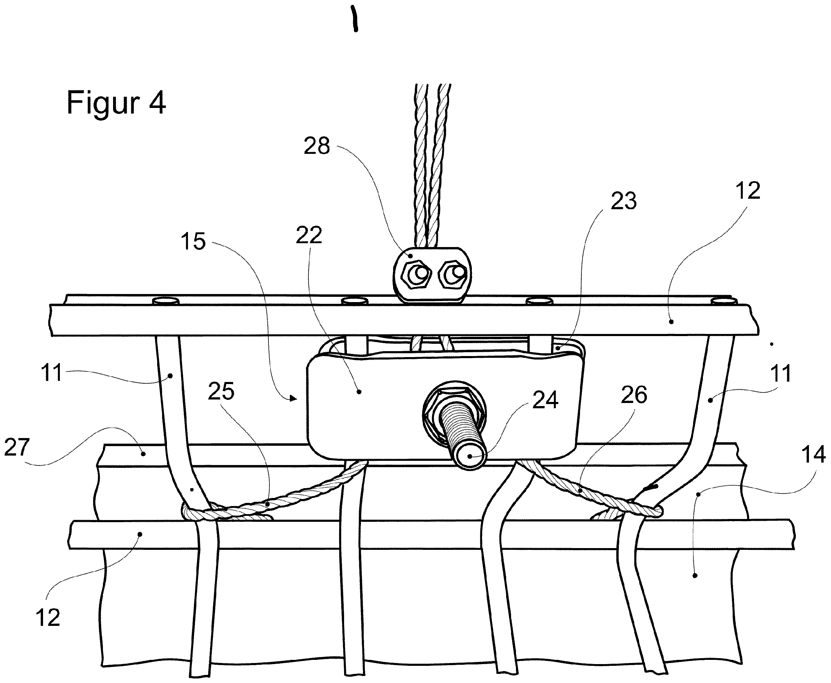

Zunächst wird auf die Figur 1 Bezug genommen, welche in schematischer Darstellung einen Ausschnitt einer Absperrung bzw. eines Anprallschutzsystems beispielsweise für eine Parkfläche eines Parkhauses gemäß einem Ausführungsbeispiel der vorliegenden Erfindung von der Innenseite hergesehen zeigt. An der Innenseite der Absperrung, dem Bereich zugewandt, in dem in einem Parkhaus die Fahrzeuge abgestellt werden, befindet sich die Gitterstabmatte 10 der Absperrung, die üblicherweise aus vertikalen Gitterstäben 11 sowie mit diesen verbundenen horizontalen Gitterstäben 12 besteht, die sich jeweils kreuzen. Zur Stabilisierung und Erhöhung der Belastbarkeit kann die Gitterstabmatte 10 eine oder mehrere Sicken 13 aufweisen, in denen die Gitterstäbe aus der Ebene der Gitterstabmatte 10 herausragen. Die Gitterstabmatte 10 wird mittels spezifischer Befestigungseinrichtungen, die in Figur 1 nicht dargestellt sind, in ihrem Endbereich (in horizontaler Richtung gesehen) in beiden Endbereichen an vertikalen Pfosten der Gebäudekonstruktion verankert. Die Anbringung der Nachhaltigkeitsmodule 14, beispielsweise eines Photovoltaikmoduls an der Gitterstabmatte 10 erfolgt zum einen mittels erster Befestigungseinrichtungen 15, die in einem oberen Bereich der Gitterstabmatte 10 angeordnet sind und später anhand der Figur 4 noch näher erläutert werden. Hier können beispielsweise zwei solcher erster, oberer Befestigungseinrichtungen 15 für die Befestigung jeweils eines Nachhaltigkeitsmoduls bzw. eines Photovoltaikmoduls 14 vorgesehen sein. Weiterhin sind für die Befestigung zweite, untere Befestigungseinrichtungen 16 vorgesehen, die beispielsweise jeweils im Zwischenraum zwischen zwei benachbarten, aneinandergrenzenden Nachhaltigkeitsmodulen 14 angeordnet sein können, die die beiden Nachhaltigkeitsmodule 14 jeweils in ihrem Randbereich übergreifen und mittels Klemmwirkung an einer Gitterstabmatte 10 festlegen, wobei diese zweiten unteren Befestigungseinrichtungen 16 später noch im Detail unter Bezugnahme auf die Figur 3 erläutert werden.

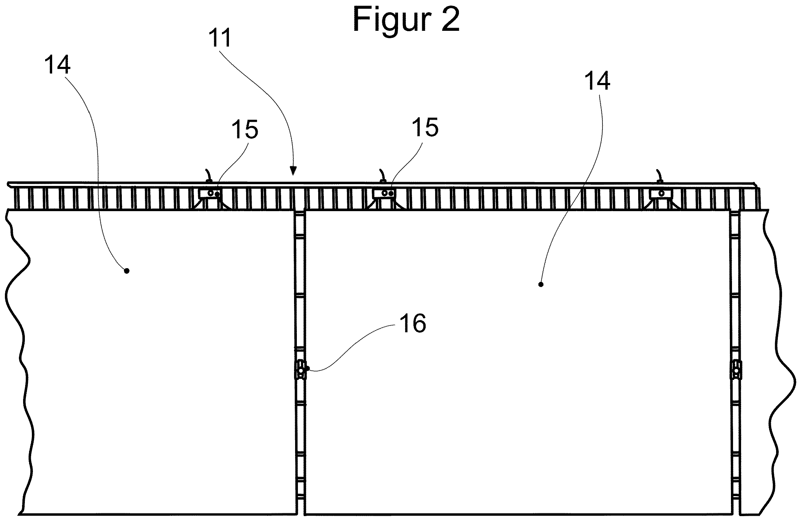

Die Figur 2 zeigt die Ansicht der Absperrung von der Außenseite hergesehen. Man erkennt zwei Photovoltaikmodule 14, welche an einer Gitterstabmatte 10 angebracht sind. Außerdem sind zwei erste, obere Befestigungseinrichtungen 15 zu erkennen sowie eine zweite, untere Befestigungseinrichtung 16, die zwei benachbarte Photovoltaikmodule 14 jeweils in ihrem Randbereich erfasst. Diese "untere" Befestigungseinrichtung 16 kann mit Abstand zur Unterkante der Photovoltaikmodule 14 angeordnet sein, vorzugsweise etwa in einer Höhe, vom Boden ausgesehen, in der die Stoßkräfte wirksam werden, wenn es zu einem Anprall durch ein Fahrzeug kommt, welches versehentlich von der Innenseite her gegen die Gitterstabmatte 10 fährt. Diese Höhe der Anordnung der Befestigungseinrichtung 16 kann beispielsweise 50 cm bis 1 m über dem Boden liegen.

Nachfolgend wird nun unter Bezugnahme auf die Figur 3 die untere Befestigungseinrichtung 16 näher erläutert. Die Photovoltaikmodule 14 sind an der Außenseite der Gitterstabmatte 10 angebracht, insbesondere im Stoßbereich zweier benachbarter Gitterstabmatten 10. Bei dieser Befestigungseinrichtung handelt es sich um eine Klemmvorrichtung umfassend als Klemmelemente zum einen eine Klemmplatte 17, die sich an der Innenseite der Absperrung befindet und gegen zwei benachbarte vertikale Stäbe 11 einer Gitterstabmatte 10 drückt. Weiterhin ist eine Gewindeschraube 18 vorhanden, die die Klemmplatte 17 durchsetzt und auf die eine Mutter 19 aufgeschraubt ist, die die Klemmplatte 17 beaufschlagt. Auf diese Weise dient die Klemmplatte 17 als Widerlager der Befestigungseinrichtung 16 und ist an der Gitterstabmatte 10 festlegbar. Die Befestigungseinrichtung 16 umfasst weiterhin an der Außenseite der Absperrung eine Klemmschiene 20 mit im Querschnitt einem Omega-Profil, deren beide äußere Schenkel 20a jeweils einen Kantenbereich des Rands 14a eines Photovoltaikmoduls 14 bzw. dessen Rahmen übergreifen. Wie anhand der Darstellung erkennbar, umfasst die Klemmschiene 20 einen mittleren Abschnitt, der in einer jeweils zu den beiden äußeren Schenkeln 20a nach einwärts versetzten Ebene liegt und so eine Nut 21 in der Klemmschiene 20 ausbildet, wobei der Kopf der Gewindeschraube 18 jeweils in einem radial äußeren Randbereich die beiden äußeren Schenkel 20a der Klemmschiene 20 übergreift. Der Schaft der Gewindeschraube 18 durchsetzt sowohl die Klemmplatte 17, auf der Innenseite der Sandwich-Anordnung aus Gitterstabmatte 10 und Photovoltaikmodul 14, als auch die Klemmschiene 20 auf der Außenseite der Anordnung, so dass bei Anziehen der Mutter 19 die Klemmplatte 17 auf der Innenseite an die senkrechten Gitterstäbe 11 angedrückt wird und auf der Außenseite die Klemmschiene 20 die beiden Photovoltaikmodule 14 zu sich hinzieht und gegen die Gitterstabmatte 10 drückt. Die in der Figur 3 dargestellten schraffierten und mit der Bezugsziffer 14 versehenen Bereiche können grundsätzlich auch einen Teil eines (Montage-)Rahmens 27 bilden, über welchen die Nachhaltigkeitsmodule 14 an der Gitterstabmatte 10 festlegbar sind.

Nachfolgend wird unter Bezugnahme auf die Figur 4 die Funktion der ersten, oberen Befestigungseinrichtung 15 gemäß einer möglichen Ausführungsvariante näher erläutert. Diese umfasst zwei Klemmplatten 22, 23, die mittels einer Schraubverbindung 24 an zwei vertikalen Gitterstäben 11 festgelegt sind, welche von den beiden Klemmplatten 22, 23 eingefasst werden. Die erste, obere Befestigungseinrichtung 15 umfasst weiterhin Zugmittel in Form von zwei Stahlseilen 25, 26, die durch den Zwischenraum zwischen den beiden Klemmplatten 22, 23 hindurchgeführt, danach jeweils um einen vertikalen Gitterstab 11 herumgeführt und schließlich an dem Rahmen 27 des Nachhaltigkeitsmoduls 14 festgelegt sind. Das jeweils andere Ende der Stahlseile 25, 26 ist oberhalb der beiden Klemmplatten 22, 23 zwischen zwei horizontalen Gitterstäben 12 hindurchgeführt und an diesen Gitterstäben 12 mittels einer Klemme 28 fixiert, so dass die Stahlseile 25, 26 nicht nachrutschen können. Tritt der Belastungsfall ein, bei dem sich die zweite, untere Befestigungseinrichtung 16 löst, bewegt sich durch den Anprall das Nachhaltigkeitsmodul 14 in seinem unteren Bereich nach außen hin von der Gitterstabmatte 10 weg, wobei der obere Rahmen 27 des Nachhaltigkeitsmoduls 14 jedoch durch die beiden Stahlseile festgehalten wird, so dass das Nachhaltigkeitsmodul bzw. das Photovoltaikmodul 14 eine Schwenkbewegung um eine horizontale Achse vollführt, die etwa im Bereich des oberen Rahmens 27 liegt.

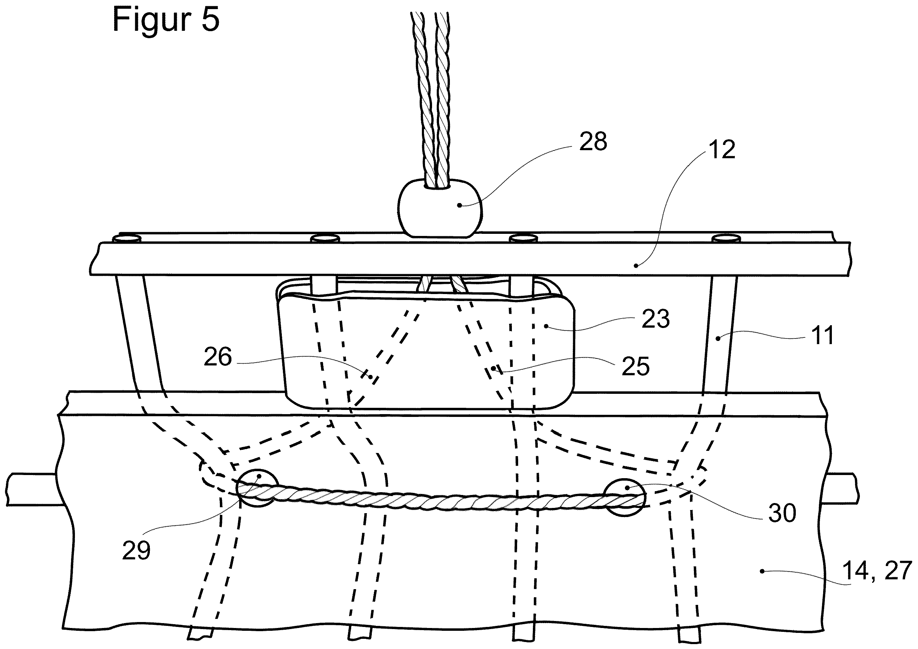

Während die Figur 4 eine Ansicht der ersten, oberen Befestigungseinrichtung 15 von der Innenseite der Absperrung hergesehen zeigt, so dass man auf die Gitterstabmatte 10 schaut, zeigt die Figur 5 eine entsprechende Ansicht des oberen Bereichs der Absperrung mit der ersten, oberen Befestigungseinrichtung 15, wobei man hier jedoch auf die Außenseite der Absperrung schaut, an der sich die Nachhaltigkeitsmodule 14 befinden, die an der Gitterstabmatte 10 angebracht ist. Die Verwendung von Stahlseilen 25, 26 als Zugmittel im Bereich der ersten, oberen Befestigungseinrichtung 15, um die Nachhaltigkeitsmodule 14 bei einem Anprall an der Gitterstabmatte 10 zu halten, wurde bereits oben unter Bezugnahme auf die Figur 4 erläutert. In Figur 5 erkennt man, dass die beiden Stahlseile 25, 26, nachdem sie um je einen vertikalen Gitterstab 11 herumgeführt wurden, auf der Außenseite der Absperrung jeweils durch ein Bohrung 29, 30 im Rahmen 27 des Nachhaltigkeitsmoduls 14 hindurchgeführt sind und jenseits der Bohrungen 29, 30 die beiden Stahlseile 25, 26 zu einem Strang verbunden sind, so dass das Stahlseil eine geschlossene Schleife bildet, deren beiden Enden durch die beiden Klemmplatten 22, 23 hindurchgeführt sind und mittels der Klemme 28 oberhalb der Klemmplatten 22, 23 und oberhalb der obersten horizontalen Gitterstäbe 12 der Gitterstabmatte 10 fixiert sind.

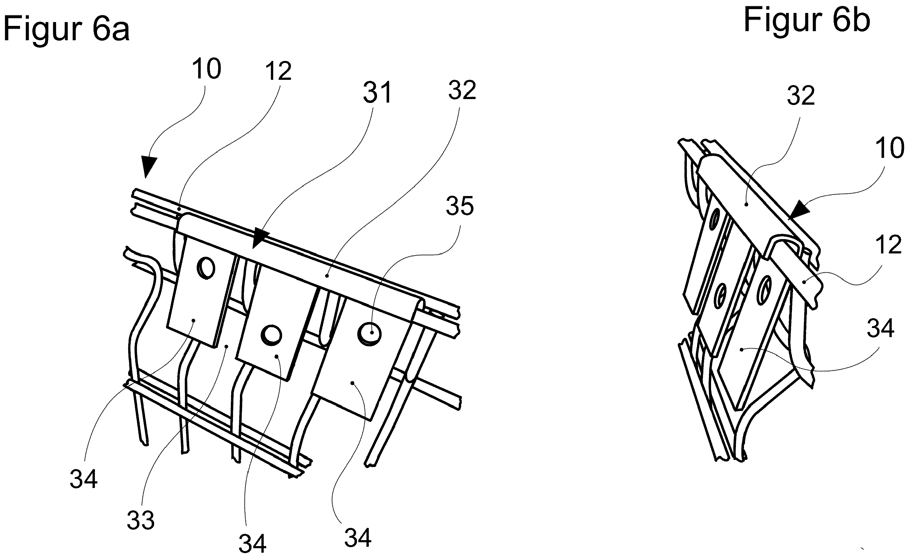

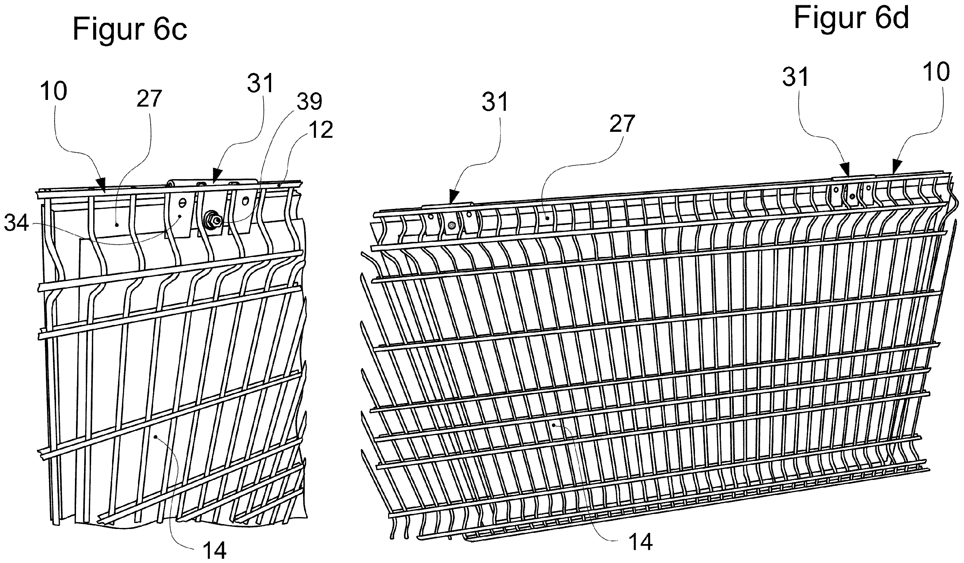

In den Figuren 6a bis 6d ist eine weitere Ausführungsvariante einer ersten, oberen Befestigungseinrichtung 15 dargestellt. Diese umfasst vorliegend ein Klammerelement 31, welches über einen Horizontalstab 12 der Gitterstabmatte 10 greift und mit einem Nachhaltigkeitsmodul 14, beispielsweise über eine Distanzschraube 39 (siehe Figur 6c) verbunden werden kann. Wie anhand der Figuren erkennbar, umfasst das Klammerelement 31 ein U-förmig ausgebildetes Basiselement 32, das vorliegend über einen Horizontalstab 12 der Gitterstabmatte 10 greift. Das Klammerelement 31 weist drei jeweils über Aussparungen 33 voneinander beabstandete Platten- oder Flachelemente 34 auf, die jeweils mit einer Bohrung 35 versehen sind.

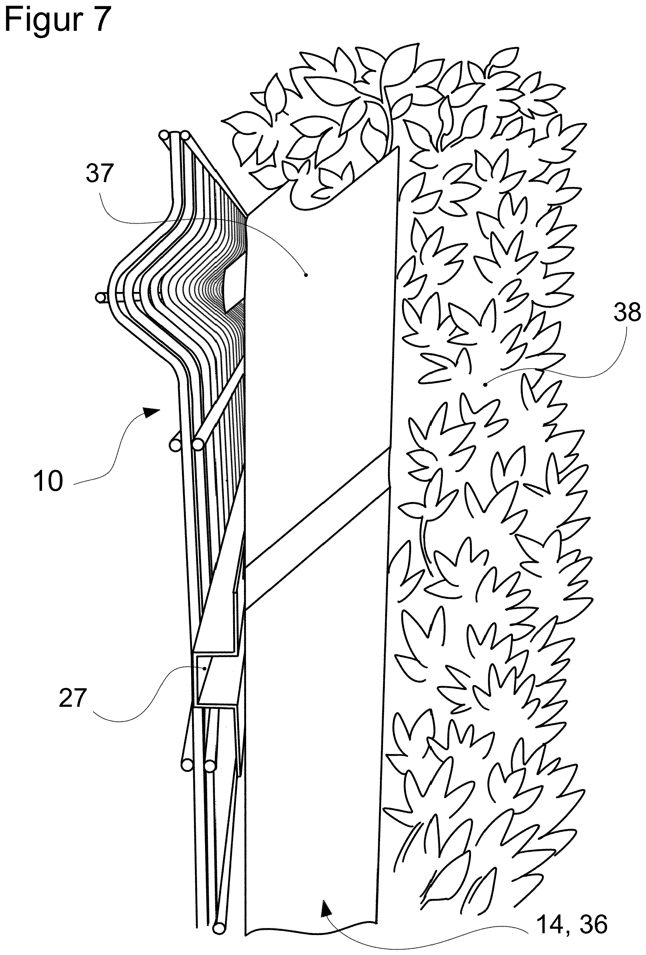

In Figur 7 ist ein alternatives Ausführungsbeispiel der vorliegenden Erfindung dargestellt. Bei dieser Variante besteht das Nachhaltigkeitsmodul 14 aus einem Begrünungsmodul 36. Dieses umfasst einen (Montage-)Rahmen 27, der beispielsweise aus mehreren horizontal und vertikale verlaufenden Montageschienen bestehen kann, an dem Vertikalblumenkästen 37 angebracht sind. Hierüber können Pflanzen 38 die Flächen der Gitterstabmatten 10 bedecken, um so das Mikroklima im Bereich eines Parkhauses zu verbessern.

### Bezugszeichenliste

- 10: Gitterstabmatte
- 11: vertikale Gitterstäbe
- 12: horizontale Gitterstäbe
- 13: Sicke
- 14: Nachhaltigkeitsmodul / Photovoltaikmodule
- 15: erste, obere Befestigungseinrichtung
- 16: zweite, untere Befestigungseinrichtung
- 17: Klemmelement / Klemmplatte
- 18: Gewindeschraube
- 19: Mutter
- 20: Klemmelement / Klemmschiene
- 20 a: äußere Schenkel der Klemmschiene
- 21: Nut
- 22: Klemmelement / Klemmplatten
- 23: Klemmelement / Klemmplatten
- 24: Schraubverbindung
- 25: Stahlseil
- 26: Stahlseil
- 27: (Montage-)Rahmen des Nachhaltigkeitsmoduls
- 28: Klemme
- 29: Bohrung im Rahmen des Nachhaltigkeitsmoduls
- 30: Bohrung im Rahmen des Nachhaltigkeitsmoduls
- 31: Klammerelement
- 32: Basiselement
- 33: Aussparung
- 34: Plattenelement
- 35: Bohrung
- 36: Begrünungsmodul
- 37: Vertikalblumenkästen
- 38: Pflanzen
- 39: Befestigungsmittel / Distanzschraube

## Patentansprüche

1. Anordnung, insbesondere zur Verwendung als Absturzsicherung in einem Parkhaus, umfassend ein Anprallschutzsystem mit mindestens einem an dem Anprallschutzsystem in senkrechter Ausrichtung angeordneten Nachhaltigkeitsmodul (14), wobei das Anprallschutzsystem mindestens eine Gitterstabmatte (10) umfasst, an der das Nachhaltigkeitsmodul (14) über zumindest eine erste, in einem oberen Bereich der Gitterstabmatte (10) angeordnete, Befestigungseinrichtung (15) und zumindest eine zweite, in einem unteren Bereich der Gitterstabmatte (10) angeordnete, Befestigungseinrichtung (16) befestigt ist, derart, dass die zweite Befestigungseinrichtung (16) sich bei Einwirkung einer Kraft, die einen vorgegebenen Grenzwert überschreitet und die senkrecht oder in einem spitzen Winkel auf die Fläche der Gitterstabmatte (10) einwirkt, aus ihrer Verbindung mit der Gitterstabmatte (10) löst, wohingegen die Verbindung der ersten, im oberen Bereich angeordneten, Befestigungseinrichtung (15) mit der Gitterstabmatte (10) bestehen bleibt.

2. Anordnung nach Anspruch 1, wobei die erste, obere Befestigungseinrichtung (15) einerseits an dem Nachhaltigkeitsmodul (14) in dessen oberem Bereich und andererseits an wenigstens einem Stab (11, 12) der Gitterstabmatte (10) angeordnet ist.

3. Anordnung nach Anspruch 1 oder 2, wobei die erste, obere Befestigungseinrichtung (15) wenigstens ein Zugmittel (25, 26) umfasst, welches mit dem Nachhaltigkeitsmodul (14), vorzugsweise an seinem, ggf. oberen, Rahmen (27), verbunden ist, wobei das Zugmittel (25, 26) vorzugsweise durch mindestens eine Bohrung (29, 30) des Nachhaltigkeitsmoduls (14) geführt ist und jenseits dieser Bohrung (29, 30) an der Gitterstabmatte (10) angeordnet ist.

4. Anordnung nach Anspruch 3, wobei die erste, obere Befestigungseinrichtung (15) ein Klemmelement (22, 23) umfasst, welches an wenigstens einem Stab (11, 12) der Gitterstabmatte (10) angeordnet ist und wobei das wenigstens eine Zugmittel (25, 26) durch das Klemmelement (22, 23) hindurchgeführt und mit dem Nachhaltigkeitsmodul (14) verbunden ist.

5. Anordnung nach Anspruch 3 oder 4, wobei das wenigstens eine Zugmittel (25, 26) in seiner Längserstreckung gesehen durch das Klemmelement (22, 23) hindurchgeführt ist, danach wenigstens einen Stab (11) der Gitterstabmatte (10) umgreift und schließlich durch das Nachhaltigkeitsmodul (14) geführt ist, um dieses an der Gitterstabmatte (10) festzulegen.

6. Anordnung nach einem der vorhergehenden Ansprüche 3 bis 5, wobei das wenigstens eine Zugmittel (25, 26) wenigstens zwei Zugmittelstränge (25, 26) umfasst und jeder Zugmittelstrang (25, 26) jeweils wenigstens einen Stab (11, 12) der Gitterstabmatte (10) umgreift.

7. Anordnung nach einem der vorhergehenden Ansprüche 4 bis 6, wobei das Klemmelement (22, 23) der ersten, oberen Befestigungseinrichtung (15) an wenigstens zwei Stäben (11, 12) der Gitterstabmatte (10) angeordnet ist.

8. Anordnung nach Anspruch 1 oder 2, wobei die erste, obere Befestigungseinrichtung (15) wenigstens ein Klammerelement (31) umfasst, welches über einen Horizontalstab (12) der Gitterstabmatte (10) greift und mit dem Nachhaltigkeitsmodul (14), vorzugsweise an seinem, ggf. oberen, Rahmen (27), verbunden ist.

9. Anordnung nach Anspruch 8, wobei das Klammerelement (31) ein U-förmig ausgebildetes Basiselement (32), das über einen Horizontalstab (12) der Gitterstabmatte (10) greift, und mindestens ein mit einer Bohrung (35) versehenes Platten- oder Flachelement (34), vorzugsweise mindestens zwei jeweils mit einer Bohrung (35) versehene Platten- oder Flachelemente (34) und mindestens eine Aussparung (33) zwischen diesen Platten- oder Flachelementen (34) aufweist, das bzw. die sich von dem Basiselement (32) senkrecht erstrecken.

10. Anordnung nach Anspruch 8 oder 9, wobei ein Schenkel des U-förmig ausgebildeten Basiselements (32) kürzer ist als das zu dem Schenkel parallel verlaufende mit der Bohrung (35) versehene Platten- oder Flachelement (34).

11. Anordnung nach einem der vorhergehenden Ansprüche 8 bis 10, wobei das wenigstens eine Klammerelement (31) über ein Befestigungsmittel (39) mit dem Nachhaltigkeitsmodul (14) verbunden ist, wobei das Befestigungsmittel (39) vorzugsweise durch mindestens eine Bohrung (29, 30) des Nachhaltigkeitsmoduls (14) und des Platten- oder Flachelements (34) geführt ist.

12. Anordnung nach einem der vorhergehenden Ansprüche, wobei die zumindest eine zweite Befestigungseinrichtung (16) als Klemmeinrichtung ausgebildet ist, die das wenigstens eine Nachhaltigkeitsmodul (14) erfasst und dieses klemmend an wenigstens einem Stab (11, 12) der Gitterstabmatte (10) festlegt.

13. Anordnung nach Anspruch 12, wobei die zumindest eine zweite Befestigungseinrichtung (16) den Randbereich des mindestens einen Nachhaltigkeitsmoduls (14), oder vorzugsweise den Randbereich eines ersten Nachhaltigkeitsmoduls (14) sowie den Randbereich eines zweiten, benachbart zu dem ersten Nachhaltigkeitsmodul (14) angeordneten, Nachhaltigkeitsmoduls (14) gemeinsam übergreift.

14. Anordnung nach Anspruch 12 oder 13, wobei die zumindest eine zweite Befestigungseinrichtung (16) zwei Klemmelemente (17, 20) umfasst, wobei das erste Klemmelement (20) den Randbereich des mindestens eines Nachhaltigkeitsmoduls (14) erfasst und das zweite Klemmelement (17) in Richtung senkrecht zur Ebene des Nachhaltigkeitsmoduls (14) mit Abstand zum ersten Klemmelement (20) angeordnet ist und an wenigstens einem Stab (11, 12) der Gitterstabmatte (10), vorzugsweise an wenigstens zwei Stäben (11, 12) der Gitterstabmatte (10), ein Widerlager hat.

15. Anordnung nach einem der vorhergehenden Ansprüche 12 bis 14, wobei das erste Klemmelement (20) und das zweite Klemmelement (17) der zweiten Befestigungseinrichtung (16) über wenigstens ein Gewindeelement, insbesondere über eine Gewindestange, einen Gewindebolzen oder eine Schraube (18) miteinander verbindbar sind.
